# FASCICULE DE BREVET EUROPEEN

(11) **EP 3 078 203 B1**
(45) Date de publication et mention de la délivrance du brevet: **24.07.2019**
(21) Numéro de dépôt: 14828200.7
(22) Date de dépôt: 05.12.2014
(51) Int. Cl.: H04N 21/41, H04N 21/418, H04N 21/436, H04N 21/4363

(54) **MODULE DE PILOTAGE D'UN RÉCEPTEUR DE CONTENUS MULTIMÉDIAS, SERVEUR ET PROCÉDÉS D'ÉLABORATION DE CONTENUS ET DE MESSAGES ASSOCIÉS**
MODUL ZUR STEUERUNG EINES MULTIMEDIA-INHALTSEMPFÄNGERS, SERVER UND VERFAHREN ZUR ERZEUGUNG VON INHALTEN UND ASSOZIIERTEN NACHRICHTEN
MODULE FOR CONTROLLING A MULTIMEDIA CONTENT RECEIVER, SERVER AND METHODS FOR DEVELOPING CONTENT AND ASSOCIATED MESSAGES

(30) Priorité: 05.12.2013 FR 1362168
(43) Date de publication de la demande: 12.10.2016
(73) Titulaire: Anse Technology, 83000 Toulon (FR)
(72) Inventeur: BELTRA, Olivier, 83000 Toulon (FR); JULIEN, Jean-Christophe, 838000 Toulon (FR)
(74) Mandataire: Brun, Philippe Alexandre Georges
(86) Numéro de dépôt international: PCT/FR2014/053200
(87) Numéro de publication internationale: WO 2015/082863

(56) Documents cités:
- EP-A1- 2 453 630
- FR-A1- 2 944 177
- US-A1- 2005 175 178
- US-A1- 2007 250 872
- US-A1- 2012 124 456
- JOSEF NOLL: "Services and Applications in Future Wireless Networks", TELEKTRONIKK, TELENOR AS, NORWAY , no. 3/4 1 janvier 2006 (2006-01-01), pages 61-71, XP002563233, ISSN: 0085-7130 Extrait de l'Internet: URL:http://www.telenor.com/en/resources/im ages/Page_061-071_tcm28-44860.pdf [extrait le 2010-01-13]

## Description

L'invention concerne le domaine des récepteurs de contenus, par exemple sonores ou visuels, pour lesquels on souhaite décupler les interactions avec un ou plusieurs utilisateurs.

Elle concerne plus particulièrement les récepteurs de contenus multimédias conformes à la norme de télévision numérique DVB (*Digital Video Broadcasting* selon une terminologie anglo-saxonne).

Pour interagir avec un tel récepteur de contenus, un utilisateur utilise en premier lieu une interface homme-machine proposée par ledit récepteur : boutons, menus. L'utilisateur a généralement en outre recours à une télécommande communiquant avec ledit récepteur par diodes infrarouges. Un tel dispositif de contrôle ou de pilotage est de courte portée. Il requiert également de minimiser les obstacles susceptibles d'obérer la qualité de la liaison infrarouge. Ces deux premiers modes d'interaction permettent à l'utilisateur d'un récepteur d'exploiter les principales fonctions proposées par ce dernier : mises en service, en veille ou à l'arrêt du récepteur, choix d'un contenus, réglage du volume sonore, de la brillance de l'écran, etc. Selon les contenus réceptionnés, notamment si ceux-ci sont conformes à la norme DVB, des méta-informations sont associés auxdits contenus. Ces méta-informations sont ainsi reçues par le récepteur (via une antenne hertzienne, satellite ou fibre) conjointement avec les contenus multimédias via un flux de transport. Au moyen de sa télécommande, un utilisateur peut ainsi déclencher une consultation d'une grille des programmes, d'un résumé d'un programme (film, émission, débat, concert, etc.), connaître le niveau moral requis pour visionner ledit programme, etc. Ces méta-informations peuvent être affichées à l'écran au sein d'un encadré superposé à la vue principale du programme.

La relative fragilité des télécommandes infrarouges mais aussi et surtout la multiplicité de télécommandes pour piloter un téléviseur, un lecteur de supports numériques de salon, un home-cinéma, ont conduit certains fabricants de télécommandes à concevoir des télécommandes dites universelles : c'est-dire apte à piloter une pluralité d'équipements ou de récepteurs distincts.

Ces dispositifs sont toutefois généralement onéreux. Leur généricité conduit parfois à une grande complexité des boutons. Pout éviter cet inconvénient, certains ont opté pour des télécommandes comportant un écran tactile - réduisant le nombre de boutons au détriment du coût et de la fragilité du dispositif.

La démocratisation des Smartphones (téléphones mobiles intelligents) ou des tablettes interactives a suggéré à certains acteurs de développer des applications téléchargeables sur de tels dispositifs, qui lors de leur exécution, transforme ledit smartphone ou la tablette en une télécommande universelle, profitant ainsi de l'écran tactile d'ores et déjà disponible sur de tels équipements. Ces dispositifs ne disposant pas d'un protocole de communication infrarouge, cette solution requiert l'ajout d'un boîtier intermédiaire de pilotage du récepteur, constituant ainsi une passerelle entre le téléphone ou la tablette et module infrarouge du récepteur. Les deux premiers communiquent via un protocole de courte portée - de type « Bluetooth » et le boîtier communique avec le récepteur au moyen d'une liaison infrarouge. Toutefois, le niveau d'interaction entre le récepteur et son utilisateur reste équivalent à celle procurée par une télécommande classique. En outre, ce boîtier nécessite une alimentation électrique dédiée, un positionnement correct au regard du récepteur, ce qui dégrade l'esthétisme de la solution (enchevêtrement de câbles) mais aussi augmente les manipulations lors de l'installation ou de la modification de la solution.

Il existe par ailleurs des boîtiers que l'on peut connecter à un récepteur, par exemple une connexion d'entrée vidéo de type HDMI (*High-Definition Multimedia Interface* selon une terminologie anglo-saxonne) pour un téléviseur récent. Leur principale fonction consiste à pouvoir s'affranchir d'une connexion physique par câbles. Un téléphone mobile ou une tablette voire un ordinateur portable peuvent ainsi communiquer via une liaison sans fil, par exemple en utilisant les protocoles « Bluetooth » ou Wi-Fi, avec ledit boîtier et lui transmettre des contenus, tels que des films, diaporamas, etc. Le récepteur, par exemple un téléviseur, restitue ledit contenu comme un simple écran d'ordinateur additionnel lorsque l'entrée vidéo idoine de ce dernier est sélectionnée via une télécommande par exemple. De la même manière, une alimentation électrique dédiée au module est requise, un câble (par exemple selon la norme HDMI) est également nécessaire pour relier le récepteur au module. Très souvent, l'utilisateur doit ajouter une télécommande supplémentaire pour paramétrer le module additionnel. Contrairement aux solutions précédentes, l'utilisateur ne peut pas « prendre la main » et piloter le récepteur en tant que tel.

Les postes de télévisions récents disposent d'une ou de plusieurs interfaces communes pour accueillir respectivement des modules additionnels, généralement des décodeurs de contenu encodés, tels que des chaînes de télévision payantes par exemple. De tels modules s'apparentent à une carte de faible épaisseur qui se glisse dans un logement aménagé sur la face arrière du téléviseur et communique avec celui-ci via un bus filaire (par exemple selon les protocole et format PCMCIA (*Personal Computer Memory Card International Association*). Cette technologie a été initialement prévue pour notamment connecter à un ordinateur des cartes ou modules additionnels au moyen d'un connecteur normalisé. La connexion peut se faire à chaud, c'est-à-dire sans nécessiter la mise hors tension de l'équipement hôte. Cette solution a été transposée au monde de la télévision numérique. Une telle solution permet de s'affranchir d'une alimentation et d'une connectique dédiées à un tel module. En outre, ce dernier est piloté « de manière transparente » par la télécommande native du récepteur. En effet, son rôle ne se limite qu'à la mise en oeuvre d'une fonction de décodage d'un contenu préalablement réceptionné par le récepteur de manière encodé et transmis au module pour décodage en temps réel.

US 2007/250872, par example, divulgue un module POD sans fil d'un récepteur de contenus multimédias respectivement associés à des méta-informations, comportant des moyens pour décrypter un premier contenu multimédia et des moyens pour recevoir commandes d'une télécommande.

Néanmoins de tels modules ne permettent pas d'offrir une interaction accrue du récepteur avec l'utilisateur.

La présente invention se propose de remédier à au moins une partie des inconvénients précités et propose une solution permettant conjointement de démultiplier les interactions possibles entre l'utilisateur et un récepteur, de protéger certains utilisateurs, par exemple de jeunes enfants, au regard de certains contenus réceptionnés par ledit récepteur ou encore d'interagir avec d'autres utilisateurs distants.

A cet effet, l'invention concerne un module de pilotage d'un récepteur de contenus multimédias préalablement et respectivement associés à des méta-informations, ledit récepteur comportant des moyens pour décoder un tel contenu multimédia, interpréter une méta-information qui lui est associée et délivrer en réponse à une commande déterminée une information exploitable par un périphérique de sortie, ledit module de pilotage comportant des moyens de traitement pour décoder un contenu multimédia, interpréter une méta-information préalablement associée audit contenu multimédia et, en mettant en oeuvre un procédé d'élaboration déterminé, élaborer un deuxième contenu multimédia et une deuxième méta-information associée audit deuxième contenu, les moyens de traitement élaborant en outre une commande interprétable par les moyens pour décoder du récepteur, les moyens de traitement du module de pilotage coopérant avec les moyens pour décoder du récepteur via une interface de communication. Pour décupler l'interactivité avec le récepteur, le module de pilotage comporte des moyens pour communiquer avec un objet électronique distant selon une communication sans fil, lesdits moyens pour communiquer coopérant avec les moyens de traitement dudit module de pilotage pour transmettre un message sortant élaboré par lesdits moyens de traitement à destination dudit objet électronique distant, ledit message comportant ou étant élaboré à partir de la méta-information associée au contenu multimédia décodé par les moyens de traitement dudit module de pilotage.

Pour permettre à un tiers d'influer sur une restitution, les moyens pour communiquer peuvent être adaptés pour recevoir et transmettre aux moyens de traitement un message entrant émis depuis l'objet communicant et interprétable par lesdits moyens de traitement. En outre, en réponse à la réception dudit message, ces derniers peuvent élaborer le deuxième contenu multimédia selon la teneur dudit message entrant.

En variante et/ou en complément, lesdits moyens de traitement peuvent élaborer la commande interprétable selon la teneur dudit message entrant.

Pour permettre à un module de pilotage d'élaborer le deuxième contenu ou méta-information voire la commande interprétable, ledit module de pilotage peut comporter des moyens de mémorisation coopérant avec les moyens de traitement pour enregistrer un programme d'ordinateur dont la ou les instructions de programmes déclenchent, lorsqu'elles sont interprétées ou exécutées par lesdits moyens de traitement, la mise en oeuvre d'un procédé d'élaboration de contenu conforme à l'invention.

Un tel procédé d'élaboration d'un contenu multimédia et d'une méta-information associée audit contenu, mis en oeuvre par des moyens de traitement d'un module de pilotage d'un récepteur selon l'invention, comporte une étape pour décoder un premier contenu multimédia associé à une première méta-information, une étape pour élaborer un deuxième contenu multimédia et une deuxième méta-information à partir du premier contenu multimédia et de la première méta-information, une étape pour élaborer une commande interprétable par des moyens pour décoder du récepteur. Il comprend en outre une étape pour élaborer un message sortant selon ladite première méta-information ou comportant celle-ci à destination d'un objet distant en communication avec ledit module de commande et une étape pour émettre ledit message sortant via des moyens pour communiquer dudit module.

Pour interpréter un message entrant émis depuis un objet communiquant avec un module de pilotage, un tel procédé comporte une étape pour interpréter la teneur d'un message entrant réceptionné par les moyens pour communiquer du module, ledit message entrant étant préalablement émis depuis un objet en communication distante avec ledit module et pour lequel l'étape pour élaborer le deuxième contenu multimédia et la deuxième méta-information consiste à combiner le premier contenu multimédia décodé ou la première méta-information associée audit premier contenu avec une donnée contenue dans ledit message entrant.

En variante, un tel procédé peut comporter une étape pour élaborer la commande interprétable en fonction d'une donnée contenue dans le message entrant.

Dans le cas où le premier contenu multimédia serait associé à une pluralité de premières méta-informations, un procédé selon l'invention peut avantageusement comporter une étape préalable à l'étape pour élaborer un message sortant à destination d'un objet distant en communication avec ledit module de commande pour sélectionner une méta-information parmi ladite pluralité pour élaborer ledit message sortant selon une donnée transmise préalablement dans un message entrant.

L'invention concerne en outre un objet électronique comportant des moyens de communication aptes à établir une communication sans fil avec un module de pilotage d'un récepteur de contenus multimédia selon l'invention. Un tel objet comporte des moyens de traitement adaptés pour interpréter un message entrant transmis par ledit module et déclencher en réponse audit message un traitement déterminé.

Pour que l'objet puisse adresser un message traduisant une volonté d'interagir d'un tiers, les moyens de traitement dudit objet peuvent être avantageusement adaptés pour élaborer et transmettre un message sortant à destination du module de pilotage, ledit message étant interprétable par les moyens de traitement dudit module pour élaborer un contenu multimédia et/ou une méta-information associée audit contenu voire une commande interprétable par un récepteur coopérant avec ledit module de pilotage.

Pour mettre en oeuvre un service collaboratif, un objet selon l'invention peut comporter des moyens pour établir une communication avec un serveur distant, pour lequel les moyens de traitement sont aptes à émettre un message à destination dudit serveur et/ou recevoir un message émis par ledit serveur.

Pour adapter ou configurer un objet communicant au sens de l'invention, l'invention prévoit que des moyens de mémorisation, coopérant avec les moyens de traitement de l'objet, enregistrent un programme d'ordinateur dont la ou les instructions de programmes déclenchent, lorsqu'elles sont interprétées ou exécutées par lesdits moyens de traitement de l'objet, la mise en oeuvre d'un procédé pour communiquer avec un module de pilotage d'un récepteur de contenus multimédia selon l'invention.

Un tel procédé pour communiquer avec un module de pilotage d'un récepteur de contenus multimédias préalablement et respectivement associés à des méta-informations, ledit procédé peut être mis en oeuvre par des moyens de traitement d'un objet électronique conforme à l'invention situé à portée de communication sans fil avec un module de pilotage d'un récepteur également conforme à l'invention. Il comporte en outre une étape pour interpréter un message entrant émis depuis ledit module et déterminer une méta-information associée à un contenu multimédia décodé par ledit module, une étape pour mettre en oeuvre un traitement selon la teneur de ladite méta-information.

Selon un mode de réalisation avantageux, le traitement peut consister à élaborer un message sortant interprétable par les moyens de traitement du module de pilotage pour élaborer un contenu multimédia, une méta-information et/ou une commande interprétable par un récepteur coopérant avec le module de pilotage.

L'invention concerne en outre un serveur de service collaboratif, comportant des moyens de traitement, des moyens pour communiquer avec un ou plusieurs objets électroniques adaptés conformément à l'invention, des moyens de mémorisation, lesdits moyens pour communiquer et lesdits moyens pour mémoriser coopérant avec lesdits moyens de traitement. Pour mettre en oeuvre un tel service, les moyens de mémorisation enregistrent préalablement des identificateurs d'un premier et d'un deuxième objets pour matérialiser un groupe déterminé d'objets détenus respectivement par des utilisateurs d'une communauté déterminée. Les moyens de traitement sont en outre adaptés pour interpréter un message entrant émis depuis le premier objet et préparer un message sortant à destination du deuxième objet, la teneur dudit message sortant étant fonction de celle du message entrant.

L'invention concerne en outre un système comportant un récepteur de contenus multimédia associés respectivement à des méta-informations, un module de pilotage coopérant avec ledit récepteur, un objet électronique à portée de communication sans fil dudit module, lesdits objet et module étant conformes à l'invention.

A titre d'exemple d'application préférée, l'objet peut consister en un téléphone mobile intelligent ou une tablette communiquant avec le module de pilotage suivant le protocole de communication Wi-Fi. Le récepteur peut être un poste de télévision comportant un connecteur de type « interface commune » pour accueillir ledit module de pilotage, les moyens de traitement du module de pilotage et les moyens pour décoder du récepteur communiquent via une interface de communication de type PCMCIA. Les contenus multimédia peuvent être conformes à la norme « *Digital Video Broadcasting* ». Les méta-informations correspondent dans ce cas, aux tables d'attributs associés auxdits contenus numériques dont la table « *Event Information Table* ».

Lorsqu'un système selon l'invention comporte un serveur de service collaboratif, l'objet électronique et ledit serveur peuvent communiquer avantageusement au travers du réseau Internet.

D'autres caractéristiques et avantages apparaîtront plus clairement à la lecture de la description qui suit se rapportant à un exemple de réalisation donné à titre indicatif et non limitatif et à l'examen des figures qui l'accompagnent parmi lesquelles :
- la figure 1 décrit un système conforme à l'invention comportant un récepteur sous la forme d'un téléviseur coopérant avec un module de pilotage en communication avec un objet électronique de type smartphone ou tablette interactive ;
- les figures 2 et 3 illustrent respectivement deux exemples d'application d'un système conforme à l'invention.

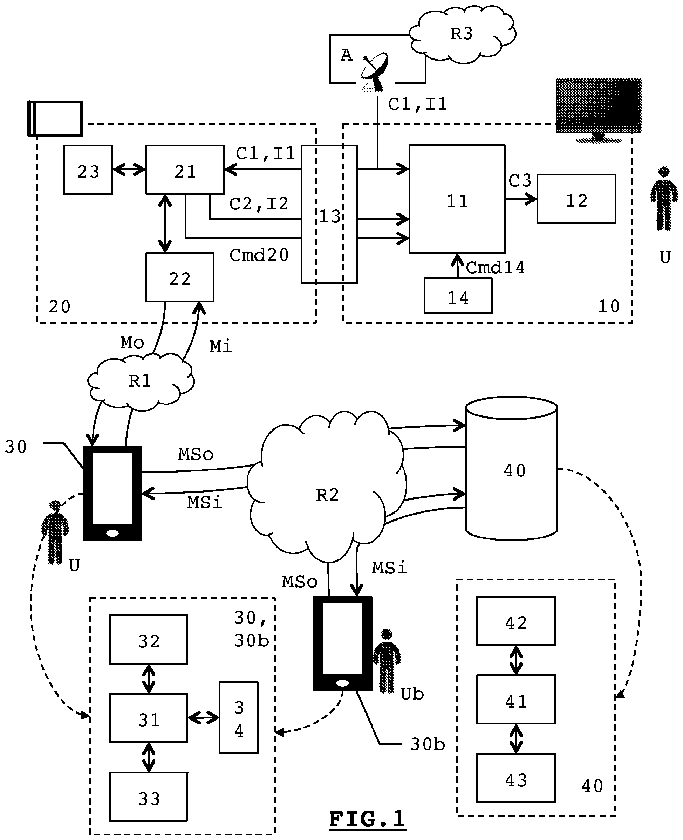

La figure 1 présente un exemple non limitatif d'application mettant en scène un récepteur de contenus multimédias 10 sous la forme d'un poste de télévision ou téléviseur. Ce récepteur 10 reçoit via une antenne A, par exemple une parabole satellite, des programmes multimédias sous la forme de contenus C1 accompagnés respectivement d'une ou de plusieurs méta-informations I1 caractérisant lesdits contenus. Les contenus C1 et méta-informations I1 sont véhiculés par un réseau de transport R3.

Dans le cas de la diffusion de contenus multimédias conforme à la norme européenne de diffusion numérique de vidéo DVB (*Digital Video Broadcasting*)*,* un contenu ou programme C1 se compose de flux élémentaires : flux de la composante vidéo, flux de la composante audio, flux de sous-titres dans différents langues, etc. Le réseau de transport exploité peut véhiculer un contenu unique, comme par exemple dans le cas du réseau SPTS (*Single Program Transport Stream* selon une terminologie anglo-saxonne) ou une pluralité de contenus, comme par exemple dans le cas du MPTS (*Multiple Program Transport Stream* selon une terminologie anglo-saxonne). Les méta-informations I1 associées aux contenus C1 sont avantageusement assemblées sous forme de tables définissant les différents flux élémentaires.

L'invention ne saurait être limitée par cet exemple de diffusion numérique. On pourrait tout aussi bien décrire l'invention au travers de normes concurrentes, par exemple les normes ATSC (*Advanced Television Systems Committee*) exploitées en Amérique du Nord ou encore les normes ISDB (*Integrated Services Digital Broadcasting*) mises en oeuvre en Asie ou en Amérique du Sud.

Le récepteur 10 se compose traditionnellement d'un ou de plusieurs périphériques de sortie 12, comme par exemple un écran, des haut-parleurs, aptes à restituer à un utilisateur un signal ou plus généralement une information C3 délivré par un décodeur (ou tuner) 11 apte à décoder un contenu multimédias C1, correspondant par exemple à un programme ou événement télévisuel, accompagné de méta-informations I1 réceptionnés conjointement depuis l'antenne A. Dans le cas d'un réseau de transport pluri-programmes, la sélection d'un contenu à décoder parmi une pluralité se fait au moyen de commandes Cmd14 délivrées par une interface 14 de type homme-machine, par exemple des boutons, et/ou par un module infrarouge communiquant avec une télécommande (non représentée sur la figure 1). On considère par la suite, que le décodeur 11 est à même de décoder un contenu déterminé C1, d'élaborer l'information C3 pouvant éventuellement comporter un encart pour visualiser une méta-information, telle que par exemple un résumé du contenu décodé.

Pour décupler les interactions entre un récepteur 10 et un ou des utilisateurs U, l'invention prévoit la conception d'un module de pilotage du récepteur 20 dont les fonctions principales consistent à :
- piloter le décodeur 11 du récepteur pour maîtriser la restitution de programmes par le ou les périphériques de sortie 12, principalement en élaborant et délivrant au décodeur 11 d'un récepteur 10 un contenu C2 associé à une ou plusieurs méta-informations I2 élaborés respectivement à partir d'un premier contenu multimédias C1 et/ou d'une première méta-information I1 et en élaborant et délivrant audit décodeur 11 des commandes Cmd20 interprétables par ledit décodeur 11 ;
- établir une communication R1 - de préférence sans fil - avec un objet électronique distant, par exemple un Smartphone, une tablette, un ordinateur portable, exploité par un utilisateur U du récepteur 10.

Une grande majorité d'utilisateurs, respectivement référencés U et Ub en figure 1, dispose chacun d'un objet électronique 30 ou 30b permettant de constituer un environnement de loisir et/ou de travail personnels. De tels objets supportent généralement un ou plusieurs modes ou protocoles de communication de proximité sans fil 32, tels que des protocoles de type Bluetooth ou bien Wi-Fi par exemple. De tels objets comportent en outre des interfaces homme-machine 34 très sophistiquées, comme par exemple un écran généralement tactile, des écran et clavier dissociés, sans commune mesure avec ce que peut offrir la meilleure télécommande universelle disponible. En outre, un tel objet comporte des moyens de traitement internes 31 coopérant avec les moyens pour communiquer 32, les moyens pour interfacer 34 mais aussi avec des moyens pour mémoriser des applications et un profil ou plusieurs profils d'utilisateur. Un tel objet « connaît » en effet les principales « caractéristiques, centres d'intérêts ou préférences » de son utilisateur. Il connaît en outre les contacts privilégiés dudit utilisateur. En créant une liaison entre le module de pilotage 20 et un tel objet, l'invention permet ainsi de créer une passerelle ou un prolongement de l'utilisateur U d'un objet 30 vis à vis du récepteur 10.

Pour faciliter l'installation d'un module de pilotage 20 et supporter les échanges avec le récepteur 10 et assurer de bonnes performances, un module de pilotage 20 du décodeur 11 d'un récepteur 10 conforme à l'invention coopère avec ce dernier, de préférence via une interface de communication 13 par exemple de type « interface commune » (Common interface CI selon une terminologie anglo-saxonne) par un bus PCMCIA. Un tel module pourrait en variante être intégré au récepteur 10 ou encore communiquer avec ce dernier par tous autres protocoles et liaisons.

Le module 20 comporte en outre principalement des moyens de traitement 21 pour décoder un contenu multimédia C1, par exemple pour mettre en oeuvre un algorithme de décryptage propre à un schéma de protection de contenus payants ou CAS (*Conditional Access Systems selon une terminologie anglo-saxonne*), interpréter une méta-information I1 préalablement associée audit contenu multimédia C1 et élaborer un deuxième contenu multimédia C2 et/ou une deuxième méta-information I2 associée audit deuxième contenu. Pour cela, lesdits moyens de traitement mettent en oeuvre un procédé d'élaboration de contenu et de méta-information déterminé. Les moyens de traitement 21 sont également prévus pour élaborer en outre une ou plusieurs commandes Cmd20 interprétables par les moyens pour décoder 11 du récepteur 10. De telles commandes permettent par exemple de déclencher automatiquement la mise en service ou en veille du récepteur. Elles permettent en outre de donner la priorité au décodage du contenu élaboré par le module de pilotage 20 en lieu et place d'un contenu reçu depuis l'antenne A.

Ainsi, les moyens pour décoder 11 du récepteur délivrent en réponse à une commande déterminée Cmd20 ou Cmd14 une information C3 exploitable par un périphérique de sortie 12, sur la base d'un contenu multimédia C1 réceptionné directement depuis l'antenne A ou un contenu C2 élaboré par le module de pilotage 20.

Un contenu C2 et/ou une méta-information I2 peuvent être élaborés par les moyens de traitement 21 du module de pilotage 20 à partir de rien ou bien d'un ou de modèles préétablis respectivement enregistrés dans des moyens de mémorisation 23 du module 20 coopérant avec lesdits moyens de traitement 21. L'élaboration peut en outre être réalisée à partir d'un premier contenu C1 et/ou de méta-information I1 réceptionnés par l'antenne A et le récepteur 10. Pour cela, le module 20 recueille via l'interface de communication 13, les contenu C1 et méta-information I1. Un procédé d'élaboration peut comporter une étape pour décoder le contenu C1 et/ou la méta-information I1. Il peut en outre comporter une étape pour combiner lesdits contenus C1 et/ou ladite information I1 décodés avec des données et/ou contenus préalablement enregistrés par les moyens 23. Le contenu C2 ainsi élaboré, accompagné éventuellement d'une méta-information I2, est délivré via l'interface 13 au décodeur 11 du récepteur 10.

L'étape d'élaboration délivrant en outre une commande Cmd20 interprétable par le décodeur 11 du récepteur 10, le contenu C2 peut ainsi être décodé par le décodeur 11 puis restitué par le périphérique de sortie 12. Il est donc possible d'enrichir ou d'édulcorer la teneur d'un programme originel, initialement le contenu C1, lors de sa restitution via le signal ou l'information C3.

Pour permettre à l'utilisateur U d'interagir sur l'élaboration du contenu C2 mise en oeuvre par les moyens de traitement 21, le module de pilotage 20 selon l'invention comporte des moyens pour communiquer 22 avec un objet électronique distant 30 selon une communication sans fil R1. Lesdits moyens pour communiquer 22 coopèrent avec les moyens de traitement 21 dudit module de pilotage. Les moyens de communication 22 ont pour fonction de transmettre un message sortant Mo élaboré par les moyens de traitement 21 à destination dudit objet électronique distant 30. Un tel message Mo comporte avantageusement ou est élaboré à partir de la méta-information I1 associée au contenu multimédia C1 décodé par les moyens de traitement 21 dudit module de pilotage.

L'objet électronique 30 peut ainsi être avisé d'informations caractérisant le contenu multimédia correspondant au programme que le récepteur s'apprête à restituer à l'utilisateur U.

Dans le cas d'un contenu multimédia conforme à la norme DVB, un message sortant peut comporter une méta-information tirée d'une table telle la table PMT (*Program Map Table*) qui identifie et indique les flux composant un contenu ou programme), la table EIT (*Event Information Table*) qui décrit les événements de chaque service par exemple, le nom de l'événement, l'heure de début, la durée, le niveau de moralité requis ou encore l'âge minimum conseillé) pour bénéficier de la restitution du programme, etc.

L'objet communicant 30 peut éventuellement être en communication avec une pluralité de modules de pilotage 20. En effet, plusieurs récepteurs distincts peuvent respectivement coopérer avec plusieurs modules de pilotage selon l'invention et être disposés dans un même espace ou habitation. Il est donc possible de mettre en relation, au travers d'un réseau Wi-Fi, représenté schématiquement par R1, ces différents éléments. Pour que l'objet 30 puisse identifier le module de pilotage 20 ayant émis un message sortant Mo, ledit module de pilotage comporte avantageusement un identificateur ID20 unique et dédié, par exemple enregistré dans les moyens de mémorisation 23 propres audit module.

Lors de l'élaboration du message Mo, ce dernier peut comporter conjointement la valeur de l'identificateur ID20 et une méta-information I1 ou toute autre donnée additionnelle.

Dans le cas avantageux où ledit identificateur ID20 consiste en un couple d'une clé publique et d'une clé privée, l'invention prévoit que le message Mo puisse être signé avec la clé privée du module 20. En variante, l'identificateur ID20 peut consister en une seule clé privée de chiffrement/déchiffrement. Le message Mo peut alors être chiffré à l'aide de cette clé privée préalablement à son émission. Ainsi, si l'objet 30 connaît, après une phase éventuelle de découverte que nous décrirons plus loin, l'identificateur ID20, qui peut être par exemple la valeur de la clé privée de chiffrement ou la valeur de la clé publique du module 20), l'objet peut identifier l'auteur, i.e. le module de pilotage 20, du message Mo. Dans le cas d'un schéma - dit à clé publique - l'objet peut vérifier la signature du message Mo en utilisant la clé publique du module de pilotage concerné. Si l'objet ne dispose pas de l'identificateur ID20, il ignore ledit message Mo.

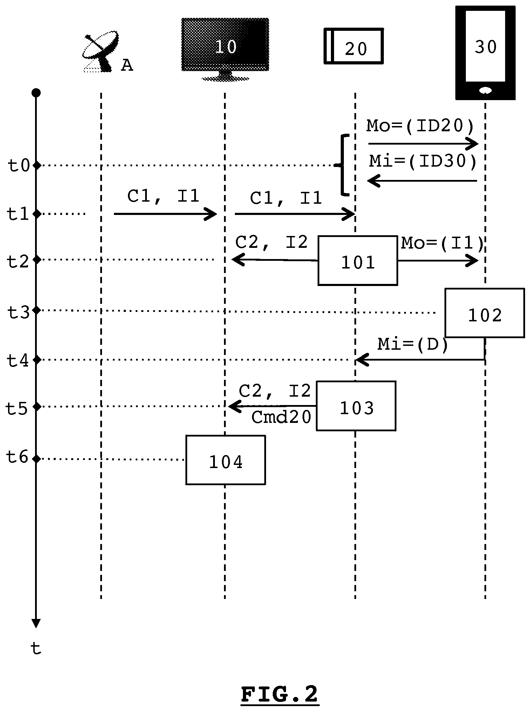

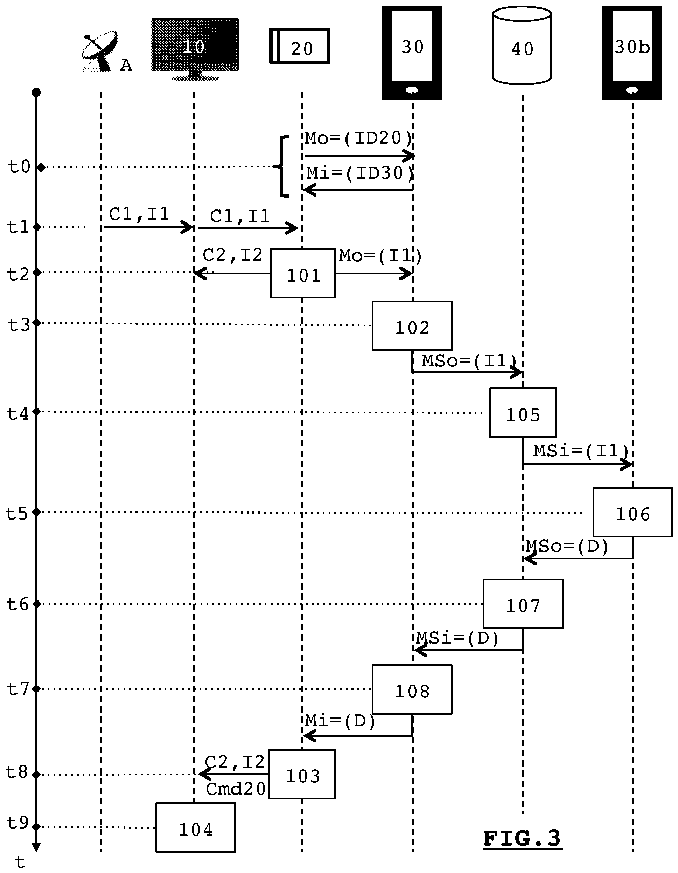

Comme nous le verrons plus loin lors de la description d'exemples d'application en liaison avec les figure 2 et 3, l'invention prévoit qu'un module de pilotage 20 puisse réciproquement recevoir des messages entrants Mi émis depuis un objet 30. Ainsi, au même titre que les messages sortants Mo, les messages Mi ceux-ci sont véhiculés via le réseau R1, par exemple un réseau Wi-Fi. Les moyens de communication 22 d'un module le pilotage 20 sont alors adaptés pour recevoir et transmettre aux moyens de traitement 21 un message entrant Mi émis depuis un objet communicant, par exemple l'objet 30. Un tel message Mi est interprétable par lesdits moyens de traitement 21. Un tel message Mi comporte avantageusement une donnée, qui peut être sous la forme d'un contenu textuel, graphique, vidéo ou d'une commande, interprétable par les moyens de traitement 21 qui en réponse à la réception dudit message Mi déclenchent la mise en oeuvre d'un procédé d'élaboration de contenu C2, voire d'information I2 et de commande Cmd20, déterminé. Ainsi, le contenu multimédia C2 peut être élaboré selon la teneur dudit message entrant Mi.

On peut ainsi, comme nous le verrons plus loin, enrichir le contenu originel C1 par ladite donnée transmise depuis l'objet 30. Ce contenu C2 sera ainsi restitué *in fine* par le périphérique de sortie 12 en tenant compte de ladite donnée transmise dans un message Mi.

La réception et l'interprétation d'un message Mo émis depuis un module de pilotage 20 et/ou l'élaboration et l'émission d'un message Mi à destination d'un tel module 20 nécessitent d'adapter l'objet communicant 30. Pour cela, l'invention prévoit qu'une application puisse être téléchargée par exemple dans les moyens de mémorisation 33 de l'objet 30. Avantageusement l'application peut se présenter sous la forme d'un programme d'ordinateur comportant une pluralité d'instructions de programme qui, lorsqu'elles sont exécutées ou interprétées par les moyens de traitement 31 de l'objet, déclenchent la mise en oeuvre d'un procédé de traitement desdits messages. Il en est de même pour le procédé d'élaboration de contenus, de méta-informations et/ou de commandes mis en oeuvre par les moyens de traitement 21 du module de pilotage 20. Les moyens de mémorisation 23 dudit module peuvent ainsi comporter un ou plusieurs programmes d'ordinateur dont les instructions de programme, lorsqu'elles sont interprétées ou exécutées par les moyens de traitement 21, déclenchent la mise en oeuvre d'un procédé d'élaboration déterminé.

Au même titre que le module de pilotage 20, un objet 30 peut avantageusement comporter un identificateur unique ID30 permettant de l'identifier ou d'identifier son utilisateur auprès du module de pilotage. Un tel identificateur ID30 peut avantageusement consister en un couple de clés privée et publique. Les messages Mi peuvent ainsi être signés préalablement à leur émission avec la clé privée de l'objet 30. Le module 20 peut dès lors, s'il connaît la clé publique dudit objet, vérifier la signature du message, identifier et authentifier l'auteur du message Mi. Ce denier message peut en outre comporter l'identificateur ID20 ou de manière préférée être chiffré par la clé publique du module de pilotage 20. Ce dernier pourra être la seule entité à pouvoir le prendre en considération le message Mi. Toute autre schéma de sécurité et d'authentification pourrait en variante être mis en oeuvre pour maitriser les échanges de messages entrants et sortants entre les deux éléments 20 et 30.

Pour accroître davantage les interactions entre un utilisateur et un récepteur mais aussi entre deux utilisateurs d'un même récepteur voire de deux récepteurs distincts, l'invention prévoit un serveur dédié 40 pour relayer ou créer des échanges entre deux objets 30 et 30b adaptés selon l'invention. Un premier objet 30 peut ainsi être informé via la méta-information I1, la méta-information I1 étant transmise par le module 20 via un message Mo du programme correspondant au contenu C1 visualisé par l'utilisateur U. Si ledit utilisateur a souscrit un service de collaboratif, un procédé de traitement d'un message entrant Mo mis en oeuvre par l'objet 30 peut consister à élaborer un message sortant MSo à destination du serveur 40. Le serveur est avantageusement garant d'un tel service collaboratif. Sur la base de la teneur du message MSo émis par l'objet 30, le message MSo étant réceptionné par des moyens de communication 42 qui transmettent à des moyens de traitement 41 du serveur, ces derniers se chargent de mettre en oeuvre un procédé pour élaborer et transmettre - éventuellement si des conditions prédéterminées sont satisfaites - un deuxième message MSi émis à destination d'un deuxième objet 30b utilisé par un deuxième utilisateur Ub. Ce deuxième objet 30b comporte, à l'instar du l'objet 30, des moyens de traitement 31 adaptés pour interpréter un tel message et déclencher à leur tour un message Mi à destination d'un module de pilotage d'un récepteur de l'utilisateur Ub. Alors que l'utilisateur Ub bénéfice de la restitution d'un contenu C4 via son récepteur (non représenté en figure 1), le module de pilotage, coopérant avec ledit récepteur, peut enrichir le contenu C4 en cours de décodage pour y adjoindre des éléments en lien avec le programme visionné par l'utilisateur U. L'utilisateur Ub peut ainsi être informé par un encadré, généré dynamiquement par le module de pilotage et restitué par le périphérique de sortie du récepteur, que l'utilisateur U visionne le programme C1 voire même, percevoir un message personnel saisi par l'utilisateur U via l'objet 30. En effet, un tel message personnel peut être intégré au message MSo élaboré par ledit objet 30 à destination du serveur 40, message personnel relayé ou propagé par le serveur 40 via un message MSi à destination de l'objet 30b.

Le serveur 40 comporte des moyens pour mémoriser 43 coopérant avec les moyens de traitement 41, enregistrant par exemple respectivement les identificateurs ID30 et ID30b des premier et deuxième objets 30 et 30b, matérialisant ainsi un groupe déterminé d'objets détenus respectivement par des utilisateurs distincts d'une communauté déterminée.

Un tel serveur peut également enregistrer dans les moyens de mémorisation 43, les programmes d'ordinateur correspondant respectivement à des applications prévues pour être téléchargées dans les moyens de mémorisation 33 des objets communicants, dont la mise en oeuvre permet d'adapter lesdits objets communicants selon l'invention, c'est à dire devenir capables d'élaborer, émettre, recevoir, interpréter des messages échangés avec un module de pilotage et/ou un serveur selon l'invention.

Pour illustrer l'étendue des nouvelles possibilités offertes par un système conforme à l'invention, notamment en matière d'interactivité, décrivons la mise en oeuvre de celui-ci au travers de trois cas d'application préférés, sans intention aucune de limiter l'invention à ces seuls trois exemples. Un tel système, à l'instar du système décrit en liaison avec la figure 1, comporte principalement un récepteur 10 sous la forme par exemple d'un poste de télévision et au moins un objet 30 tel qu'un Smartphone en communication R1 sans fil, par exemple un réseau de type Wi-Fi, avec un module de pilotage 20 coopérant avec ledit récepteur via une interface commune, avantageusement de type PCMCIA, du récepteur 10. Ce dernier pourrait être récepteur radio, un diffuseur d'ambiance, etc.

Un premier exemple d'application consiste en un contrôle parental particulièrement efficace et innovant.

Supposons qu'un utilisateur parent Ub souhaite prévenir toute restitution d'un programme télévisuel violent ou explicite à un utilisateur enfant U par exemple de moins de douze ans. Supposons en outre que ledit utilisateur enfant U soit en possession d'un objet communicant 30 tel qu'un smartphone voire un baladeur ou une console apte à mettre en oeuvre d'un procédé d'élaboration de contenu l'invention.

Le récepteur du foyer familial est équipé d'un module de pilotage 20 conforme à l'invention. Depuis un serveur 40, une application de contrôle parental peut être chargé dans les moyens de mémorisation 33 de l'objet communicant 30 pour que ce dernier puisse échanger avec ledit module de pilotage 20. Lesdits moyens de mémorisation 33 dudit objet 30 comportent en outre un profil utilisateur décrivant l'enfant, notamment son âge. Ils peuvent en outre comporter des paramètres complémentaires définis par le parent. On peut ainsi prévoir de limiter la durée de visionnage autorisée quotidiennement ou de manière hebdomadaire, d'enregistrer dans lesdits moyens 33 un historique des programmes ou contenus visionnés par l'enfant, etc.

La figure 2 permet de décrire les échanges et étapes mis en oeuvre par un système selon l'invention.

A l'instant t0, est mise en oeuvre une étape de découverte entre le module de pilotage 20 et l'objet 30 de l'enfant U. Ainsi, le module de pilotage 20, plus précisément les moyens de traitement 21 via des moyens de communication 22 dudit module 20, transmet un message sortant Mo comportant l'identificateur ID20, par exemple un numéro de série et une clé publique, du module de pilotage. L'objet 30, plus précisément les moyens de traitement 31 via des moyens de communication 32 dudit objet 30, interprète ledit message Mo et enregistre dans les moyens de mémorisation 33 de l'objet, ledit identificateur de module ID20. En réponse, l'objet 30 élabore et transmet un message Mi à destination dudit module de pilotage 20 comportant à son tour son identificateur d'objet ID30. Le module 20 enregistre dans ses moyens de mémorisation 23 ledit identificateur d'objet ID30, comme par exemple, un numéro de série et une clé publique d'objet. Cette étape de découverte peut être réalisée une seule fois ou régulièrement - à l'initiative du module de pilotage pour connaître et/ou mettre à jour les objets, et par conséquent les utilisateurs, susceptibles de bénéficier d'une restitution de contenus.

A l'instant t1, l'antenne A du récepteur 10 réceptionne un programme télévisuel sous la forme d'un contenu multimédia encodé C1 associé à une méta-information I1. Via l'interface de communication commune de son récepteur 10, ledit contenu C1 et ladite méta-information I1 sont transmis du récepteur 10 vers le module de pilotage 20.

A l'instant t2, le module de pilotage, plus précisément les moyens de traitement 21, déclenche la mise en oeuvre d'un procédé d'élaboration 101 d'un deuxième contenu C2 et/ou de méta-information(s) I2 visant principalement à décoder le contenu C1. Le procédé 101 élabore en outre un message de sortie Mo comportant la méta-information I1 associée au contenu C1, comme par exemple, le nom du programme et le niveau de moralité conseillé. Le message Mo peut être avantageusement signé avec la clé privée du module de pilotage et chiffré avec la clé publique de l'objet 30.

A l'instant t3, l'objet 30 réceptionne le message Mo. A l'instant t4, les moyens de traitement 31 de l'objet 30 mettent en oeuvre un procédé de traitement 102 dudit message Mo. Ce procédé peut comporter éventuellement une étape de déchiffrement du message avec la clé privée de l'objet ID30 et/ou de vérification de la signature du module de pilotage 20 avec la clé publique ID20 de celui-ci. Le procédé de traitement 102 dudit message Mo comporte une étape pour comparer l'âge de l'utilisateur U mémorisé dans les moyens de mémorisation 33, de l'objet, qui peut correspondre ici au profil de l'utilisateur U, avec la méta-information I1, qui peut être avantageusement la valeur du niveau moral conseillé par le diffuseur du programme. Si l'âge de l'enfant est en adéquation avec ledit niveau moral, le procédé 102 s'achève. A cet instant, le module de pilotage 20 poursuit son fonctionnement de manière traditionnelle. Le contenu C2 est délivré au décodeur 11 du récepteur qui transmet au périphérique de sortie du récepteur, avantageusement un écran, pour restitution. Si optionnellement, il est prévu qu'un historique doit être enregistré dans l'objet 30, le procédé 102 peut enregistrer et horodater la visualisation du programme par l'utilisateur enfant : dans ce cas, la méta-information I1 comporte le nom du programme et le niveau moral conseillé.

En revanche, si l'enfant est trop jeune pour bénéficier de la restitution dudit programme, le procédé 102 comporte une étape pour élaborer un message sortant Mi destiné au module de pilotage 20. Ce message comporte une donnée D dont la teneur est de nature à influer sur le procédé d'élaboration mis en oeuvre par le module de pilotage 20. Une telle donnée D peut consister en un ordre de non restitution du programme, un ordre d'incrustation de contenu voire une requête de mise en veille du récepteur 10. Le procédé 102 peut avantageusement comporter une étape pour signer le message Mi à l'aide de la clé publique ID30 de l'objet et pour chiffrer ledit message Mi à l'aide de la clé publique du module ID20.

A l'instant t5, le message Mi est transmis par l'objet 30 et est réceptionné par le module de pilotage 20. En réponse à ce message, ledit module met en oeuvre un procédé d'élaboration qui interprète le message Mi, notamment la donnée D. Ce procédé peut comporter une étape de déchiffrement du message à l'aide de la clé privée du module ID20 voire d'une vérification de la signature du message à l'aide de la clé publique de l'objet 30. Le procédé comporte une étape 103 pour élaborer un contenu C2, à partir du contenu C1 ou à partir d'un contenu neutre en lui adjoignant une bannière en lien avec la donnée D. A titre d'exemple non limitatif, cela peut être : « Vous n'avez pas l'âge requis pour visionner ce service ». En variante, l'étape 103 peut élaborer un contenu C2 dénué de son ou d'images voire en lieu et place ou en complément élaborer une commande Cmd20, qui lorsqu'elle sera interprétée par le décodeur du récepteur 10 en 104, à l'instant t6, commandera la non-restitution du contenu ou la mise en veille du récepteur.

La figure 3 illustre une variante de réalisation de l'application précédente intégrant un rapport transmis à destination d'un tiers, de manière avantageuse mais non limitative le parent, ainsi qu'une délégation quant à la décision de bénéficier ou non de la restitution d'un programme. Pour cela, le système comporte le serveur d'application 40 paramétré pour échanger avec l'objet 30 de l'utilisateur enfant U et l'objet 30b de l'utilisateur parent Ub.

Les étapes des procédés 101, 103 et 104 mises en oeuvre respectivement par le module de pilotage 20 et l'objet 30 décrites en liaison avec la figure 2 demeurent inchangés. En revanche, l'étape 102 mise en oeuvre par l'objet 30 en réponse à la réception du message Mo comportant la méta-information I1 est différente. En lieu et place d'élaborer un message sortant Mi à destination du module de pilotage 20 comme décrit en liaison avec la figure 2, le traitement 102 consiste à élaborer puis transmettre un message sortant MSo à destination du serveur 40, ledit message comportant la méta-information I1, qui peut être éventuellement l'âge de l'enfant, l'âge étant tiré du profil utilisateur U de l'objet 30. En effet, le parent Ub a souscrit un service collaboratif précisant que toute demande de restitution de programme en présence de son enfant U soit soumise à son approbation. Le serveur 40 est apte à mettre en oeuvre un procédé de traitement 105, à l'instant t4, du message Mso émanant de l'objet 30. Ce traitement 105 consiste à relayer l'information I1 - via un message MSi - à l'objet communicant 30b du parent. Ce dernier est préalablement initialisé, c'est à dire qu'il est apte à mettre en oeuvre l'application de contrôle de parental selon l'invention, consistant à déclencher l'exécution d'un procédé de traitement 106 dudit message et produire à l'instant t6 un message sortant MSo comportant une donnée D. Ladite donnée D est similaire à celle produite par l'objet 30 dans le cadre de l'application précédente décrite en relation avec la figure 2 à l'étape 102, traduisant la décision parentale d'autoriser ou non la restitution du programme télévisuel. Le traitement 106 comporte une étape pour comparer l'âge de l'enfant avec la méta-information I1, qui peut correspondre à la valeur du niveau moral conseillé par le diffuseur. Si l'âge de l'enfant est en adéquation avec le niveau moral conseillé pour restituer le programme, le traitement 106 produit une donnée traduisant une autorisation. Si optionnellement, il est prévu qu'un historique doit être enregistré dans l'objet 30b, le procédé 106 peut comporter une étape pour enregistrer et horodater la restitution du programme à l'enfant : dans ce cas, la méta-information I1 comporte en outre avantageusement le nom du programme.

En revanche, si l'enfant est trop jeune pour bénéficier de la restitution dudit programme, le procédé 106 comporte une étape pour élaborer un message sortant MSo comportant la donnée D. Une telle donnée D peut consister en un ordre de non restitution du programme, d'incrustation de contenu voire de mise en veille du récepteur 10.

Le message MSo est réceptionné par le serveur 40 qui élabore 107, à l'instant t6, un message MSi destiné à l'objet 30 de l'enfant U, ledit message comportant la donnée D traduisant la décision du parent. A l'instant t7 et en réponse à la réception du message MSi émanant du serveur 40, l'objet 30 met en oeuvre un procédé d'élaboration 108 d'un message Mi destiné au module de pilotage 20 comportant la donnée D. La réception dudit message Mi par le module de pilotage entraînera par les moyens de traitement de celui-ci, l'élaboration 103, à l'instant t8, du contenu C2 et/ou de la méta-information I2 voire de la commande Cmd20, de manière équivalente à celle mise en oeuvre par le procédé 103 décrit en liaison avec la figure 2. Le programme est restitué ou n'est pas restitué à l'enfant en 104, à l'instant t9 par le récepteur 10.

Selon une deuxième variante de réalisation d'une application de contrôle parental conforme à l'invention, l'étape visant à comparer le niveau moral requis pour la restitution d'un programme eu regard de l'âge d'un utilisateur est mis en oeuvre par les moyens de traitement du module de pilotage. Cette étape était partie du procédé mis en oeuvre par l'objet 30 décrit en relation avec la figure 2 ou par l'objet 30b décrit en relation avec la figure 3.

Selon cette variante, en réponse à un message Mo comportant la méta-information I1, ledit message Mo étant adressé par le module 20 à l'objet 30, les moyens de traitement dudit objet mettent en oeuvre un procédé pour élaborer et transmettre un message Mi comportant l'âge de l'enfant, l'âge de l'enfant étant enregistré dans le - ou déduit du - profil utilisateur stocké dans l'objet 30. Les moyens de traitement du module de pilotage 20 interprètent ledit message Mi et mettent en oeuvre l'étape pour comparer l'âge de l'utilisateur avec la méta-information I1, qui peut correspondre au niveau moral conseillé par le diffuseur. Si l'âge est compatible avec la diffusion du programme, le contenu C2 est élaboré à partir du contenu C1 puis restitué à l'enfant. Dans la négative, le contenu C2, la méta-information I2 voire la commande Cmd20 sont élaborés par le procédé d'élaboration mis en oeuvre par le module de pilotage à l'instar des étape 103 décrites en liaison avec les figures 2 ou 3.

Un contrôle parental selon l'invention permet à un parent, par exemple via son smartphone, d'être informé des programmes visualisés par l'un ou ses différents enfants. Le parent peut simplement être informé de ce qui est restitué en présence de ceux-ci, dans le cas où chaque enfant détient un objet communicant conforme à l'invention. Il peut en outre être à même de mettre un terme à la restitution d'un programme, à distance, depuis par exemple son smartphone. L'invention prévoit un large choix de paramétrages des procédés mis en oeuvre par un module de pilotage, un objet communicant ou un serveur. Ainsi, le parent peut autoriser un nombre d'heures maximum de restitution de programme. Un historique des programmes restitués peut être enregistré dans l'objet de l'enfant, du parent voire dans le module de pilotage. Les durées et horaires de visualisations peuvent être conservés également.

Dans le cas de la télévision numérique selon les normes DVB, la ou les méta-informations I1 exploitées pour mettre en oeuvre l'invention peuvent être tirées de la table PAT qui donne des indications de toutes les chaînes disponibles, de la table PMT, qui comporte des informations sur le service ou programme courant, ou de la table EIT, qui donne des indications sur la durée des programmes et sur la valeur du niveau moral de chaque programme diffusé, etc.

Examinons à présent l'exploitation d'un système tel que celui-ci décrit en liaison avec la figure 1, dans le cadre d'une application dite de « Social TV » ou télévision collaborative.

Deux utilisateurs U et Ub s'abonnent à un service collaboratif permettant - en temps réel - d'échanger des commentaires durant la diffusion d'un programme télévisé, une rencontre sportive par exemple.

Le serveur 40 est initialement configuré pour héberger l'application que les utilisateurs U et Ub pourront télécharger sur leur smartphones ou tablettes pour bénéficier du service. Le serveur est en outre initialisé pour connaître les identificateurs ID30 et ID30b des objets électroniques - ainsi adaptés - afin de relayer des messages entre ces derniers.

Le premier utilisateur U s'installe confortablement devant son récepteur 10 qui coopère avec un module de pilotage 20 conforme à l'invention. U est muni de son objet communicant 30, par exemple un smartphone. A des centaines de kilomètres, l'utilisateur Ub s'installe à son tour devant son récepteur 10b coopérant avec un module de pilotage 20b. Il dispose également de son objet communicant 30b, par exemple une tablette tactile.

La diffusion du programme débute via le réseau de transport R3. Les récepteurs 10 et 10b puis les modules de pilotage 20 et 20b réceptionnent le contenu C1 associé à la méta-information I1. Les modules de pilotage mettent en oeuvre un procédé d'élaboration de contenu C2 voire de méta-information I2, afin que les récepteurs 10 et 10b restituent le programme. Les modules de pilotages 20 et 20b élaborent en outre des messages Mo adressés respectivement aux objets 30 et 30b comportant la méta-information I1 pour indiquer que le programme idoine est en cours de diffusion.

L'utilisateur U décide de commenter une action de jeu particulièrement intéressante. Sur son objet 30, par le biais de l'application de service collaboratif - il compose un commentaire. Les moyens de traitement de l'objet 30 interprètent cette commande et élaborent un message MSo adressé à la communauté d'abonnés ayant souscrit au service collaboratif en lien avec ce programme. Le commentaire de l'utilisateur U est traduit sous la forme d'une donnée D intégrée au message MSo. Ce dernier est transmis au serveur 40 par le réseau R2 avantageusement mais non limitativement Internet. Le serveur 40 examine ledit message et élabore en réponse un message sortant MSi - comportant la donnée D, éventuellement amendée - à destination des abonnés concernés - en l'espèce l'abonné Ub. L'objet 30d de l'abonné Ub reçoit alors le message MSi et l'interprète. Les moyens de traitement dudit objet mettent en oeuvre un procédé d'élaboration de message sortant Mi à destination du module de pilotage 20b. A réception de celui-ci, les moyens de traitement dudit module de pilotage 20d déclenchent un procédé d'élaboration d'un contenu C2 tenant compte de la teneur du message Mi reçu. En l'espèce, le procédé consiste à combiner le contenu C1 et la donnée D, c'est-à-dire le commentaire de l'abonné U. Le récepteur 10b de l'utilisateur Ub restitue à ce dernier, par exemple sous la forme d'un encart, le commentaire de l'abonné U.

Dans le cadre de cet exemple, par souci de concision, nous avons volontairement omis de décrire des étapes avantageuses d'authentification et de sécurité assurant des échanges sécurisés entre les éléments du système. Au même titre que pour les échanges décrits en liaison avec les figures 2 et 3, les messages Mo, Mi, MSi, MSo échangés dans le cadre de cette application peuvent ainsi avantageusement être signés voire chiffrés.

Un troisième exemple d'exploitation d'un système conforme à l'invention, tel que le système décrit en liaison avec la figure 1, peut consister en une gestion personnalisée de publicité.

Pour mettre en oeuvre cette application, le serveur 40 est adapté pour suggérer un ou plusieurs messages publicitaires à destination d'un abonné selon le programme en cours de restitution. Pour cela, les moyens de traitement du module de pilotage transmettent, via un message Mo, l'identification pouvant correspondre à la méta-information I1, du programme, dans notre exemple le contenu C1, vers l'objet 30 de l'utilisateur U. L'application installée dans ledit objet, permet aux moyens de traitement de ce dernier de déclencher un procédé comportant une étape pour élaborer et transmettre, à destination du serveur 40, un message MSo comportant l'identificateur ID30 de l'objet, donc de l'utilisateur U, et la méta-information I1 identifiant le programme restitué. Le serveur 40 met en oeuvre un procédé de sélection de messages publicitaires parmi une pluralité selon la teneur de la méta-information I1. A titre d'exemple non limitatif, si l'utilisateur visionne un reportage animalier, un message publicitaire en lien avec des accessoires pour animaux domestiques sera sélectionné. Ce message est constitué sous la forme d'une donnée D et intégré sous la forme d'un message MSi, transmis par le serveur à destination de l'objet 30 de l'utilisateur U. L'objet décode ledit message et élaborer à son tour un message sortant Mi à destination du module de pilotage. A l'instar des applications précédentes, ce dernier interprète le message de l'objet 30 et intègre le message publicitaire sous la forme de la donnée D durant la restitution du programme, par exemple sous la forme d'un QR code, ou autre format adapté au profil de l'utilisateur ainsi qu'au programme en cours de restitution.

## Revendications

1. Module de pilotage (20) d'un récepteur (10) de contenus multimédias (C1, C2) préalablement et respectivement associés à des méta-informations (I1, I2), ledit récepteur (10) comportant des moyens pour décoder (11) un tel contenu multimédia (C1, C2), interpréter une méta-information (I1, I2) qui lui est associée et délivrer en réponse à une commande déterminée (Cd20, Cd14) une information (C3) exploitable par un périphérique de sortie (12), ledit module de pilotage comportant des moyens de traitement (21) pour décoder un premier contenu multimédia (C1), interpréter une première méta-information (I1) préalablement associée audit contenu multimédia et, en mettant en oeuvre un procédé d'élaboration déterminé, élaborer un deuxième contenu multimédia (C2) et une deuxième méta-information associée audit deuxième contenu (C2), les moyens de traitement élaborant en outre une commande interprétable par les moyens pour décoder (11) du récepteur (10), les moyens de traitement (21) du module de pilotage (20) coopérant avec les moyens pour décoder (11) du récepteur via une interface de communication (13), **caractérisé en ce que** le module de pilotage comporte des moyens pour communiquer (22) avec un objet électronique distant selon une communication sans fil (R1), lesdits moyens pour communiquer (22) coopérant avec les moyens de traitement (21) dudit module de pilotage pour transmettre un message sortant (Mo) élaboré par lesdits moyens de traitement (21) à destination dudit objet électronique distant (30), ledit message (Mo) comportant ou étant élaboré à partir de la méta-information (I1) associée au contenu multimédia (C1) décodé par les moyens de traitement (21) dudit module de pilotage.

2. Module selon la revendication précédente, dans lequel les moyens pour communiquer (22) sont adaptés pour recevoir et transmettre aux moyens de traitement (21) un message entrant (Mi) émis depuis l'objet communicant (30) et interprétable par lesdits moyens de traitement et, pour lequel en réponse à la réception dudit message (Mi) lesdits moyens de traitement (21) élaborent le deuxième contenu multimédia (C2) selon la teneur dudit message entrant (Mi).

3. Module selon la revendication 1, dans lequel les moyens pour communiquer (22) sont adaptés pour recevoir et transmettre aux moyens de traitement (21) un message entrant (Mi) émis depuis l'objet communicant (30) et interprétable par lesdits moyens de traitement et, pour lequel en réponse à la réception dudit message lesdits moyens de traitement (21) élaborent la commande interprétable selon la teneur dudit message entrant (Mi).

4. Module selon l'une quelconque des revendications 1 à 3, comportant des moyens de mémorisation (23) coopérant avec les moyens de traitement (21) pour enregistrer un identificateur unique de module (ID20).

5. Module selon l'une quelconque des revendications 2 à 4, comportant des moyens de mémorisation (23) coopérant avec les moyens de traitement (21) pour enregistrer une donnée (ID30, ID30b) contenue dans un message entrant (Mi).

6. Procédé d'élaboration d'un contenu multimédia (C2) et d'une méta-information (I2) associée audit contenu (C2), ledit procédé étant mis en oeuvre par des moyens de traitement (21) d'un module (20) de pilotage d'un récepteur selon l'une quelconque des revendications 1 à 5, comportant une étape pour décoder un premier contenu multimédia (C1) associé à une première méta-information (I1), une étape pour élaborer (101) un deuxième contenu multimédia (C2) et une deuxième méta-information (I2) à partir du premier contenu multimédia (C1) et de la première méta-information (I1), une étape pour élaborer une commande interprétable par des moyens pour décoder (11) du récepteur (10), ledit procédé étant **caractérisé en ce qu'**il comprend en outre une étape pour élaborer (101) un message sortant (Mo) selon ladite première méta-information (I1) ou comportant celle-ci à destination d'un objet distant (30) en communication avec ledit module de commande (20) et une étape pour émettre ledit message sortant via des moyens pour communiquer dudit module.

7. Procédé selon la revendication précédente lorsque le module (20) est conforme à la revendication 4, pour lequel l'étape pour élaborer (101) un message sortant (Mo) comporte une étape pour intégrer l'identificateur unique du module (ID20) au message sortant (Mo).

8. Procédé selon la revendication 6 lorsque le module (20) est conforme à la revendication 4, l'identificateur unique du module (ID20) consistant en une clé publique associée à une clé privée, pour lequel l'étape pour élaborer (101) un message sortant (Mo) comporte une étape pour signer le message sortant (Mo) avec la clé privée du module (20).

9. Procédé selon l'une quelconque des revendications 6 à 8 lorsque le module de commande (20) est conforme à l'une quelconque des revendications 2 à 5, comportant une étape pour interpréter la teneur d'un message entrant (Mi) réceptionné par les moyens pour communiquer (22) du module, ledit message entrant (Mi) étant préalablement émis depuis un objet distant (30) en communication avec ledit module (20) et pour lequel l'étape pour élaborer (101) le deuxième contenu multimédia (C2) et la deuxième méta-information (I2) consiste à combiner le premier contenu multimédia décodé ou la première méta-information associée audit premier contenu avec une donnée contenue dans ledit message entrant (Mi).

10. Procédé selon la revendication 9, pour lequel l'étape pour élaborer (101) la deuxième méta-information (I2) consiste à enrichir et/ou remplacer la première méta-information (I1) associée au premier contenu multimédia (C1) par une donnée contenue dans le message entrant (Mi).

11. Procédé selon l'une quelconque des revendications 9 à 10, le premier contenu multimédia (C1) étant associé à une pluralité de premières méta-informations (I1), comportant une étape préalable à l'étape pour élaborer (101) un message sortant (Mo) à destination d'un objet distant (30) en communication avec ledit module de commande (20) pour sélectionner une méta-information parmi ladite pluralité pour élaborer ledit message sortant selon une donnée transmise préalablement dans un message entrant (Mi).

12. Procédé selon la revendication 6 lorsque le module de commande (20) est conforme à l'une quelconque des revendications 2 à 5, comportant une étape pour interpréter (103) un message entrant (Mi) réceptionné par les moyens pour communiquer (22) du module, ledit message entrant (Mi) étant préalablement émis depuis un objet distant (30) en communication avec ledit module et pour lequel l'étape pour élaborer la commande interprétable est fonction d'une donnée contenue dans le message entrant (Mi).

13. Procédé selon l'une quelconque des revendications 6 à 12 lorsque le module (20) est conforme à la revendication 4, comportant une étape préalable de découverte d'un objet électronique situé à portée de communication du module, ladite étape consistant à enregistrer dans les moyens de mémorisation (23) du module (20) un identificateur (ID30) dudit objet (30) contenu dans un message entrant (Mi) émis par ledit objet et préalablement interprété par les moyens de traitement (21) du module.

14. Module selon l'une quelconque des revendications 1 à 5, comportant des moyens de mémorisation (23) coopérant avec les moyens de traitement (21) pour enregistrer un programme d'ordinateur dont la ou les instructions de programmes déclenchent, lorsqu'elles sont interprétées ou exécutées par lesdits moyens de traitement (21), la mise en oeuvre d'un procédé d'élaboration selon l'une quelconque des revendications 6 à 13.

15. Objet électronique (30, 30b) comportant des moyens de communication (32) aptes à établir une communication sans fil (R1) avec un module de pilotage (20) d'un récepteur de contenus multimédia (10) selon l'une quelconque des revendications 1 à 5 ou 14, ledit objet (30, 30b) comportant des moyens de traitement (31) adaptés pour :
- interpréter un message entrant (Mo) transmis par ledit module (20) et en déterminer une méta-information (I1) associée à un contenu multimédia (C1) décodé par ledit module ;
- élaborer et transmettre un message sortant (Mi) à destination du module de pilotage (20) lorsque celui-ci est conforme à l'une quelconque des revendications 2 à 5 ou 14, ledit message (Mi) étant interprétable par les moyens de traitement (21) dudit module (20) pour élaborer un contenu multimédia (C2) et/ou une méta-information (I2) associée audit contenu voire une commande (Cmd20) interprétable par un récepteur (10) coopérant avec ledit module (20).

16. Objet selon la revendication 15, comportant des moyens de mémorisation (33) coopérant avec les moyens de traitement (31) de l'objet pour enregistrer un identificateur unique d'objet (ID30, ID30b).

17. Objet selon l'une quelconque des revendications 15 à 16, comportant des moyens pour établir une communication (R2) avec un serveur distant (40), pour lequel les moyens de traitement (31) sont aptes à émettre un message (MSo) à destination dudit serveur (40) et/ou recevoir un message (MSi) émis par ledit serveur (40).

18. Objet selon l'une quelconque des revendications 15 à 17, comportant des moyens de mémorisation (33) coopérant avec les moyens de traitement (31) pour enregistrer un programme d'ordinateur dont la ou les instructions de programmes déclenchent, lorsqu'elles sont interprétées ou exécutées par lesdits moyens de traitement (31) de l'objet, la mise en oeuvre d'un procédé pour communiquer avec un module de pilotage (20) d'un récepteur de contenus multimédia.

19. Procédé pour communiquer avec un module de pilotage d'un récepteur de contenus multimédias (C1, C2) préalablement et respectivement associés à des méta-informations (I1, I2), ledit procédé étant mis en oeuvre par des moyens de traitement (31) d'un objet électronique (30, 30b) selon l'une quelconque des revendications 15 à 18 situé à portée de communication sans fil (R1) avec un module (20) selon l'une quelconque des revendications 1 à 5 ou 14, **caractérisé en ce qu'**il comporte une étape pour interpréter (102) un message entrant (Mo) émis depuis ledit module et déterminer une méta-information (I1) associée à un contenu multimédia (C1) décodé par ledit module, une étape pour mettre en oeuvre un traitement selon la teneur de ladite méta-information (I1).

20. Procédé selon la revendication précédente lorsque l'objet est conforme à la revendication 15 et le module est conforme à l'une quelconque des revendications 2 à 5 ou 14, pour lequel le traitement consiste à élaborer un message sortant (Mi) interprétable par les moyens de traitement (21) du module de pilotage (20) pour élaborer un contenu multimédia (C2), une méta-information (I2) et/ou une commande interprétable (Cmd20) par un récepteur (10) coopérant avec le module.

21. Procédé selon la revendication 20 lorsque l'objet (30) est conforme à la revendication 16, pour lequel l'étape pour élaborer (102) un message sortant (Mi) comporte une étape pour intégrer l'identificateur unique de l'objet (ID30) au message sortant (Mi).

22. Procédé selon l'une quelconque des revendications 19 à 21 lorsque le module est conforme à la revendication 4, comportant une étape préalable de découverte du module situé à portée de communication de l'objet, ladite étape consistant à enregistrer dans les moyens de mémorisation (33) de l'objet (30) un identificateur (ID20) dudit module (20) contenu dans un message entrant (Mo) émis par ledit module et préalablement interprété par les moyens de traitement (31) de l'objet.

23. Procédé selon l'une quelconque des revendications 19 à 22, lorsque l'objet est conforme à la revendication 17, **caractérisé en ce qu'**il comporte une étape (108) pour interpréter un message entrant (MSi) émis depuis le serveur (40), lire une information contenue dans ledit message et préparer un message sortant (Mi) à destination du module de pilotage dont la donnée contenue dans ledit message intègre ladite information.

24. Procédé selon l'une quelconque des revendications 19 à 23, lorsque l'objet est conforme à la revendication 17, **caractérisé en ce qu'**il comporte une étape (102) pour élaborer puis émettre un message sortant (MSo) à destination du serveur (40) comportant une information en lien avec la méta-information (I1) associée à un contenu multimédia (C1) décodé par ledit module.

25. Serveur (40) comportant de moyens de traitement (41), des moyens pour communiquer (43) avec un ou plusieurs objets électroniques (30, 30b) conformes aux revendications 16 et 17, des moyens de mémorisation (42), lesdits moyens pour communiquer (43) et lesdits moyens de mémorisation (42) coopérant avec lesdits moyens de traitement (41), **caractérisé en ce que** les moyens de mémorisation (42) enregistrent préalablement l'identificateur (ID30, ID30b) d'un premier et d'un deuxième objets (30, 30b) pour matérialiser un groupe déterminé d'objets détenus respectivement par des utilisateurs d'une communauté déterminée et **en ce que** les moyens de traitement (41) sont adaptés pour interpréter un message entrant (MSo) émis depuis le premier objet et préparer un message sortant (MSi) à destination du deuxième objet, la teneur dudit message sortant (MSi) étant fonction de celle du message entrant (MSo).

26. Récepteur (10) comportant des moyens pour décoder (11) un contenu multimédia (C1, C2), interpréter une méta-information (I1, I2) qui lui est associée et délivrer en réponse à une commande déterminée (Cmd20, Cmd14) une information (C3) exploitable par un périphérique de sortie (12), **caractérisé en ce qu'**il comporte en outre un module de pilotage (20) selon l'une quelconque des revendications 1 à 5 ou 14.

27. Système comportant un récepteur (10) de contenus multimédia associés respectivement à des méta-informations, un module de pilotage (20) selon l'une quelconque des revendications 1 à 5 ou 14 coopérant avec ledit récepteur (10), un objet (30) électronique selon l'une quelconque des revendications 15 à 18 à portée de communication sans fil (R1) dudit module (20).

28. Système selon la revendication précédente, pour lequel l'objet (30) consiste en un téléphone mobile intelligent ou une tablette communiquant (R1) avec le module de pilotage suivant le protocole de communication Wi-Fi, le récepteur est un poste de télévision comportant un connecteur de type « interface commune » pour accueillir ledit module de pilotage (20), les moyens de traitement (21) du module de pilotage (20) et les moyens pour décoder (11) du récepteur communiquent via une interface de communication (13) de type PCMCIA, les contenus multimédia (C1) sont conformes à la norme « *Digital Video Broadcasting* » et les méta-informations (I1) correspondent aux tables d'attributs associés auxdits contenus numériques dont la table « Event Information Table ».

29. Système selon les revendications 27 ou 28, comportant en outre un serveur (40) conforme à la revendication 25, l'objet électronique et le serveur communiquant (R2) au travers du réseau Internet.

30. Programme d'ordinateur comportant une ou plusieurs instructions de programme qui, lorsqu'elles sont interprétées ou exécutées par une unité de traitement d'un module de pilotage d'un récepteur conforme à la revendication 14, déclenchent la mise en oeuvre d'un procédé selon l'une quelconque des revendications 6 à 13.

31. Programme d'ordinateur comportant une ou plusieurs instructions de programme qui, lorsqu'elles sont interprétées ou exécutées par une unité de traitement d'un objet électronique conforme à la revendication 18, déclenchent la mise en oeuvre d'un procédé selon l'une quelconque des revendications 19 à 24.

## Patentansprüche

1. Modul zum Steuern (20) eines Empfängers (10) von Multimedia-Inhalten (C1, C2), die zuvor jeweils Metainformationen (I1, I2) zugeordnet wurden, wobei der Empfänger (10) Mittel zum Dekodieren (11) solcher Multimedia-Inhalte (C1, C2), zum Interpretieren einer ihm zugeordneten Metainformation (I1, I2) und zum Liefern von Informationen (C3), die von einer Ausgabevorrichtung (12) verwendbar sind, als Reaktion auf einen bestimmten Befehl (Cd20, Cd14) umfasst, wobei das Modul zum Steuern Verarbeitungsmittel (21) zum Dekodieren eines ersten Multimedia-Inhalts (C1), zum Interpretieren einer ersten, zuvor dem Multimedia-Inhalt zugeordneten Metainformation (I1) umfasst, und, wobei es einen bestimmten Erstellungsvorgang umsetzt, zum Erstellen eines zweiten Multimediainhalts (C2) und einer zweiten Metainformation, welche dem zweiten Inhalt (C2) zugeordnet ist, wobei die Verarbeitungsmittel zusätzlich einen Befehl erstellen, der durch die Mittel zum Dekodieren (11) des Empfängers (10) ausgelegt werden kann, wobei die Verarbeitungsmittel (21) des Moduls zum Steuern (20) mit den Mitteln zum Dekodieren (11) des Empfängers über eine Kommunikationsschnittstelle (13), zusammenwirken, die **dadurch gekennzeichnet ist, dass** das Modul zum Steuern Mittel zum Kommunizieren (22) anhand Drahtloskommunikation (R1) mit einem entfernten elektronischen Gegenstand umfasst, wobei die Mittel zum Kommunizieren (22) mit den Verarbeitungsmitteln (21) des Moduls zum Steuern zusammenwirken, um eine ausgehende Nachricht (Mo) zu übermitteln, die von den Verarbeitungsmitteln (21) erstellt wurde, die sich an den entfernten elektronischen Gegenstand (30) richten, wobei die Nachricht (Mo) Metainformationen (I1) umfasst oder ausgehend von diesen erstellt wurde, welche dem Multimedia-Inhalt (C1) zugeordnet sind, der von den Verarbeitungsmitteln (21) des Moduls zum Steuern dekodiert wurde.

2. Modul nach dem vorhergehenden Anspruch, wobei die Mittel zum Kommunizieren (22) geeignet sind, um eine eingehende Nachricht (Mi), die vom kommunizierenden Gegenstand (30) gesendet wird und der durch die Verarbeitungsmittel interpretierbar ist, zu empfangen und an die Verarbeitungsmittel (21) zu senden, und für welche Nachricht die Verarbeitungsmittel (21) als Reaktion auf den Empfang der Nachricht (Mi) den zweiten Multimedia-Inhalt (C2) gemäß dem Inhalt der eingehenden Nachricht (Mi) erstellen.

3. Modul nach Anspruch 1, in welchem die Mittel zum Kommunizieren (22) geeignet sind, um eine vom kommunizierenden Gegenstand (30) gesendete und durch die Verarbeitungsmittel interpretierbare eingehende Nachricht (Mi) zu empfangen und an die Verarbeitungsmittel (21) zu senden, und als Reaktion auf den Empfang der Nachricht die Verarbeitungsmittel (21) den Befehl erstellen, der gemäß dem Inhalt der eingehenden Nachricht (Mi) interpretierbar ist.

4. Modul nach einem der Ansprüche 1 bis 3, umfassend Speichermittel (23), die mit den Verarbeitungsmitteln (21) zusammenwirken, um eine eindeutige Modulkennung (ID20) zu speichern.

5. Modul nach einem der Ansprüche 2 bis 4, umfassend Speichermittel (23), die mit den Verarbeitungsmitteln (21) zusammenwirken, um Daten (ID30, ID30b) zu speichern, die in einer eingehenden Nachricht (Mi) enthalten sind.

6. Verfahren zum Erstellen von Multimedia-Inhalten (C2) und Metainformationen (I2), die den Inhalten (C2) zugeordnet sind, wobei das Verfahren mittels Verarbeitungsmitteln (21) eines Moduls (20) zum Steuern eines Empfängers nach einem der Ansprüche 1 bis 5 implementiert wird, umfassend einen Schritt zum Dekodieren eines ersten Multimedia-Inhalts (C1), der einer ersten Metainformation (I1) zugeordnet ist, einen Schritt zum Erstellen (101) eines zweiten Multimedia-Inhalts (C2) und einer zweiten Metainformation (I2) ausgehend von dem ersten Multimedia-Inhalt (C1) und der ersten Metainformation (I1), einen Schritt zum Erstellen eines Befehls, der durch Mittel zum Dekodieren (11) des Empfängers (10) interpretierbar ist, wobei der Vorgang **dadurch gekennzeichnet ist, dass** er zudem einen Schritt für das Erstellen (101) einer ausgehenden Nachricht (Mo) gemäß der ersten Metainformation (I1) umfasst oder diese Nachricht, die an einen entfernten Gegenstand (30) gerichtet ist, der in Kommunikation mit dem Modul zum Steuern (20) steht, und einen Schritt für das Senden der Nachricht, die über Mittel zum Kommunizieren des Moduls ausgeht, umfasst.

7. Verfahren nach dem vorhergehenden Anspruch, wobei das Modul (20) dem Anspruch 4 entspricht, wobei der Schritt des Erstellens (101) einer ausgehenden Nachricht (Mo) einen Schritt zum Integrieren der eindeutigen Kennung des Moduls (ID20) in die ausgehende Nachricht (Mo) umfasst.

8. Verfahren nach Anspruch 6, wobei das Modul (20) Anspruch 4 entspricht, wobei die eindeutige Kennung des Moduls (ID20) aus einem öffentlichen Schlüssel besteht, der einem privaten Schlüssel zugeordnet ist, für das der Schritt zum Erstellen (101) einer ausgehenden Nachricht (Mo) einen Schritt zum Signieren der ausgehenden Nachricht (Mo) mit dem privaten Schlüssel des Moduls (20) umfasst.

9. Verfahren nach einem der Ansprüche 6 bis 8, wobei das Modul zum Steuern (20) einem der Ansprüche 2 bis 5 entspricht, umfassend einen Schritt zum Interpretieren des Inhalts einer eingehenden Nachricht (Mi), die von den Mitteln zum Kommunizieren (22) des Moduls empfangen wird, wobei die eingehende Nachricht (Mi) zuvor von einem entfernten Gegenstand (30), der in Kommunikation mit dem Modul (20) übertragen wird und bei dem der Schritt zum Erstellen (101) des zweiten Multimedia-Inhalts (C2) und der zweiten Metainformation (I2) darin besteht, den ersten dekodierten Multimedia-Inhalt oder die erste Metainformation, die dem ersten Inhalt mit Daten zugeordnet ist, die in der eingehenden Nachricht (Mi) enthalten sind, zu kombinieren.

10. Verfahren nach Anspruch 9, wobei der Schritt zum Erstellen (101) der zweiten Metainformation (I2) darin besteht, die erste Metainformation (I1), die dem ersten Multimedia-Inhalt (C1) zugeordnet ist, mit Daten anzureichern und/oder durch Daten zu ersetzen, die in der eingehenden Nachricht (Mi) enthalten sind.

11. Verfahren nach einem der Ansprüche 9 bis 10, wobei der erste Multimedia-Inhalt (C1) mehreren ersten Metainformationen (I1) zugeordnet ist, die einen Schritt umfassen, welcher dem Schritt zum Erstellen (101) einer ausgehenden Nachricht (Mo), die an einen entfernten Gegenstand (30) gerichtet ist, der in Kommunikation mit dem Modul zum Steuern (20) steht, um eine Metainformation aus den mehreren Metainformationen auszuwählen, um die ausgehende Nachricht gemäß von zuvor in einer eingehenden Nachricht (Mi) übertragenen Daten zu erstellen, vorgeschaltet ist.

12. Verfahren nach Anspruch 6, wobei das Modul zum Steuern (20) einem der Ansprüche 2 bis 5 entspricht, umfassend einen Schritt des Interpretierens (103) einer eingehenden Nachricht (Mi), die durch das Kommunikationsmittel (22) des Moduls empfangen wird, wobei die eingehende Nachricht (Mi) zuvor von einem entfernten Gegenstand (30), der in Kommunikation mit dem Modul steht, übertragen wird und für das der Schritt des Erstellens des interpretierbaren Befehls abhängig von in der eingehenden Nachricht (Mi) enthaltenen Daten ist.

13. Verfahren nach einem der Ansprüche 6 bis 12, wobei das Modul (20) Anspruch 4 entspricht, umfassend einen vorgeschalteten Schritt zum Auffinden eines elektronischen Gegenstands, der sich innerhalb des Kommunikationsbereichs des Moduls befindet, wobei der Schritt darin besteht, in den Speichermitteln (23) des Moduls (20) eine Kennung (ID30) des Gegenstands (30) zu speichern, die in einer eingehenden Nachricht (Mi) enthalten ist, die von dem Gegenstand übertragen und zuvor von den Verarbeitungsmitteln (21) des Moduls interpretiert wurde.

14. Modul nach einem der Ansprüche 1 bis 5, umfassend Speichermittel (23), die mit den Verarbeitungsmitteln (21) zusammenwirken, um ein Computerprogramm zu speichern, dessen Programmbefehl(e), wenn sie von den Verarbeitungsmitteln (21) interpretiert oder ausgeführt werden, die Implementierung eines Verarbeitungsverfahrens nach einem der Ansprüche 6 bis 13 auslösen.

15. Elektronischer Gegenstand (30, 30b), umfassend Kommunikationsmittel (32), die in der Lage sind, eine drahtlose Kommunikation (R1) mit einem Modul zum Steuern (20) eines Empfängers von Multimedia-Inhalten (10) nach einem der Ansprüche 1 bis 5 oder 14 herzustellen, wobei der Gegenstand (30, 30b) Verarbeitungsmittel (31) umfasst, die geeignet sind zum :
- Interpretieren einer eingehenden Nachricht (Mo), die von dem Modul (20) übertragen wird, und Bestimmen einer Metainformation (I1), die dem Multimedia-Inhalt (C1) zugeordnet ist, der von dem Modul dekodiert wird;
- Entwickeln und Übertragen einer ausgehenden Nachricht (Mi), die sich an das Modul zum Steuern (20) richtet, wobei sie einem der Ansprüche 2 bis 5 oder 14 entspricht, wobei die Nachricht (Mi) durch die Verarbeitungsmittel (21) des Moduls (20) interpretierbar ist, um Multimedia-Inhalte (C2) und/oder Metainformationen (I2) zu erstellen, die dem Inhalt oder einem Befehl (Cmd20) zugeordnet sind, der durch einen Empfänger (10) interpretierbar ist, der mit dem Modul (20) zusammenwirkt.

16. Gegenstand nach Anspruch 15, umfassend Speichermittel (33), die mit den Verarbeitungsmitteln (31) für den Gegenstand zusammenwirken, um eine eindeutige Kennung des Gegenstands (ID30, ID30b) zu speichern.

17. Gegenstand nach einem der Ansprüche 15 bis 16, umfassend Mittel zum Herstellen einer Verbindung (R2) mit einem entfernten Server (40), für den die Verarbeitungsmittel (31) angepasst sind, um eine Nachricht (MSo) an den Server (40) zu senden und/oder eine von dem Server (40) gesendete Nachricht (MSi) zu empfangen.

18. Gegenstand nach einem der Ansprüche 15 bis 17, umfassend Speichermittel (33), die mit den Verarbeitungsmitteln (31) zusammenwirken, um ein Computerprogramm zu speichern, dessen Programmbefehle, wenn sie von den Verarbeitungsmitteln (31) für den Gegenstand interpretiert oder ausgeführt werden, die Implementierung eines Verfahrens zum Kommunizieren mit einem Modul zum Steuern (20) eines Empfängers von Multimedia-Inhalten auslösen.

19. Verfahren zum Kommunizieren mit einem Modul zum Steuern eines Empfängers von Multimedia-Inhalten (C1, C2), der zuvor mit Metainformationen (I1, I2) verbunden war, wobei das Verfahren mittels Verarbeitungsmitteln (31) für einen elektronischen Gegenstand (30, 30b) nach einem der Ansprüche 15 bis 18, der sich innerhalb eines drahtlosen Kommunikationsbereichs (R1) befindet, umfassend ein Modul (20) nach einem der Ansprüche 1 bis 5 oder 14, implementiert wird, **dadurch gekennzeichnet, dass** es einen Schritt zum Interpretieren (102) einer von dem Modul gesendeten eingehenden Nachricht (Mo) und zum Bestimmen einer Metainformation (I1), welche einem Multimedia-Inhalt (C1) zugeordnet ist, der durch das Modul dekodiert wird, einen Schritt zum Implementieren einer Verarbeitung nach dem Inhalt der Metainformationen (I1) umfasst.

20. Verfahren nach dem vorhergehenden Anspruch, wobei der Gegenstand Anspruch 15 entspricht und das Modul einem der Ansprüche 2 bis 5 oder 14 entspricht, bei dem die Verarbeitung darin besteht, eine ausgehende Nachricht (Mi) zu erstellen, die durch die Verarbeitungsmittel (21) des Moduls zum Steuern (20) interpretierbar ist, um Multimedia-Inhalte (C2), Metainformationen (I2) und/oder einen interpretierbaren Befehl (Cmd20) durch einen mit dem Modul zusammenwirkenden Empfänger (10) zu erstellen.

21. Verfahren nach Anspruch 20, wobei der Gegenstand (30) Anspruch 16 entspricht, worin der Schritt des Erstellens (102) einer ausgehenden Nachricht (Mi) einen Schritt des Integrierens der eindeutigen Kennung des Gegenstands (ID30) in die ausgehende Nachricht (Mi) umfasst.

22. Verfahren nach einem der Ansprüche 19 bis 21, wobei das Modul dem Anspruch 4 entspricht, umfassend einen vorgeschalteten Schritt zum Entdecken des Moduls, das sich innerhalb des Kommunikationsbereichs des Gegenstands befindet, wobei der Schritt darin besteht, in den Speichermitteln (33) des Gegenstands (30) eine Kennung (ID20) des Moduls (20) zu speichern, die in einer vom Modul übertragenen und zuvor von den Verarbeitungsmitteln (31) für den Gegenstand interpretierten eingehenden Nachricht (Mo) enthalten ist.

23. Verfahren nach einem der Ansprüche 19 bis 22, wobei der Gegenstand dem Anspruch 17 entspricht, **dadurch gekennzeichnet, dass** er einen Schritt (108) zum Interpretieren einer vom Server (40) gesendeten eingehenden Nachricht (MSi), zum Lesen von in der Nachricht enthaltenen Informationen und zum Vorbereiten einer ausgehenden Nachricht (Mi), die an das Modul zum Steuern gerichtet ist, während die in der Nachricht enthaltenen Daten die Informationen beinhalten, umfasst.

24. Verfahren nach einem der Ansprüche 19 bis 23, wobei der Gegenstand dem Anspruch 17 entspricht, **dadurch gekennzeichnet, dass** er einen Schritt (102) zum Erstellen und anschließenden Senden einer ausgehenden Nachricht (MSo) an den Server (40) umfasst, die Informationen bezüglich der Metainformationen (I1) enthält, die Multimedia-Inhalten (C1) zugeordnet wurden, die von dem Modul dekodiert wurden.

25. Server (40) umfassend Verarbeitungsmittel (41), Mittel zum Kommunizieren (43) mit einem oder mehreren elektronischen Gegenständen (30, 30b) nach den Ansprüchen 16 und 17, Speichermitteln (42), wobei die Mittel zum Kommunizieren (43) und die Speichermittel (42) mit den Verarbeitungsmitteln (41) zusammenwirken, **dadurch gekennzeichnet, dass** die Speichermittel (42) die Kennung (ID30, ID30b) eines ersten und eines zweiten Gegenstands (30, 30b) zum Materialisieren einer bestimmten Gruppe von Gegenständen, die jeweils von Nutzern einer bestimmten Gemeinschaft vorgehalten werden, zuerst registrieren und dass die Verarbeitungsmittel (41) daran angepasst sind, eine eingehende Nachricht (MSo) zu interpretieren, die von dem ersten Gegenstand gesendet wurde und eine ausgehende Nachricht (MSi) vorzubereiten, welche auf den zweiten Gegenstand gerichtet ist, wobei der Inhalt der ausgehenden Nachricht (MSi) von dem Inhalt der eingehenden Nachricht (MSo) abhängt.

26. Empfänger (10), umfassend Mittel zum Dekodieren (11) von Multimedia-Inhalten (C1, C2), zum Interpretieren einer zugeordneten Metainformation (I1, I2) und zum Liefern von Informationen (C3), die durch eine Ausgabevorrichtung (12) verwendbar sind, als Reaktion auf einen bestimmten Befehl (Cmd20, Cmd14), **dadurch gekennzeichnet, dass** er ferner ein Modul zum Steuern (20) nach einem der Ansprüche 1 bis 5 oder 14 umfasst.

27. System, umfassend einen Empfänger (10) für Multimedia-Inhalte, die jeweils Metainformationen zugeordnet sind, ein Modul zum Steuern (20) nach einem der Ansprüche 1 bis 5 oder 14, das mit dem Empfänger (10) zusammenwirkt, einen elektronischen Gegenstand (30) nach einem der Ansprüche 15 bis 18 in einem drahtlosen Kommunikationsbereich (R1) des Moduls (20).

28. System nach dem vorhergehenden Anspruch, bei dem der Gegenstand (30) aus einem intelligenten Mobiltelefon oder einem Tablet besteht, das gemäß dem Wi-Fi-Kommunikationsprotokoll mit dem Modul zum Steuern kommuniziert (R1), wobei der Empfänger ein Fernsehgerät ist, das einen Stecker vom Typ "*Common Interface*" zum Empfangen des Moduls zum Steuern (20) umfasst, wobei die Verarbeitungsmittel (21) des Moduls zum Steuern (20) und die Dekodierungsmittel (11) des Empfängers über eine Kommunikationsschnittstelle (13) vom Typ PCMCIA kommunizieren, wobei die Multimedia-Inhalte (C1) dem Standard "*Digital Video Broadcasting*" entsprechen und die Metainformationen (I1) den Tabellen der Merkmale entsprechen, die den numerischen Inhalten zugeordnet sind, darunter die Tabelle "Ereignis-Informations-Tabelle" ["*Event Information Table*"]*.*

29. System nach den Ansprüchen 27 oder 28, ferner umfassend einen Server (40) nach Anspruch 25, den elektronischen Gegenstand und den Server (R2), der über das Internet-Netzwerk kommuniziert.

30. Computerprogramm, umfassend eine oder mehrere Programmanweisungen, die, wenn sie von einer Verarbeitungseinheit eines Moduls zum Steuern eines Empfängers nach Anspruch 14 interpretiert oder ausgeführt werden, die Durchführung eines Verfahrens nach einem der Ansprüche 6 bis 13 einleiten.

31. Computerprogramm, umfassend eine oder mehrere Programmanweisungen, die, wenn sie von einer Verarbeitungseinheit für einen elektronischen Gegenstand nach Anspruch 18 interpretiert oder ausgeführt werden, die Durchführung eines Verfahrens nach einem der Ansprüche 19 bis 24 einleiten.

## Claims

1. Control module (20) of a receiver (10) of multimedia content items (C1, C2) previously and respectively associated with meta information items (11, 12), said receiver (10) comprising means (11) for decoding such a multimedia content item (C1, C2), interpreting a meta information item (11, 12) associated therewith and supplying, in response to a predetermined command (Cd20, Cd14), an information item (C3) that can be used by an output peripheral device (12), said control module comprising processing means (21) for decoding a first multimedia content item (C1), interpreting a first meta information item (11) previously associated with said multimedia content item and, by implementing a predetermined production method, producing a second multimedia content item (C2) and a second meta information item associated with said second content item (C2), the processing means further producing a command which can be interpreted by the decoding means (11) of the receiver (10), the processing means (21) of the control module (20) cooperating with the decoding means (11) of the receiver via a communication interface (13), **characterized in that** the control module comprises means (22) for communicating with a remote electronic object according to a wireless communication (R1), said communication means (22) cooperating with the processing means (21) of said control module in order to transmit an output message (Mo) produced by said processing means (21) to said remote electronic object (30), said message (Mo) comprising or being produced from the meta information item (11) associated with the multimedia content item (C1) decoded by the processing means (21) of said control module.

2. Module according to the preceding claim, wherein the communication means (22) are suitable for receiving and transmitting to the processing means (21) an input message (Mi) which is emitted from the communicating object (30) and can be interpreted by said processing means and wherein, in response to receiving said message (Mi), said processing means (21) produce the second multimedia content item (C2) on the basis of the content of said input message (Mi).

3. Module according to claim 1, wherein the communication means (22) are suitable for receiving and transmitting to the processing means (21) an input message (Mi) which is emitted from the communicating object (30) and can be interpreted by said processing means and wherein, in response to receiving said message, said processing means (21) produce the interpretable command on the basis of the content of said input message (Mi).

4. Module according to any of claims 1 to 3, comprising storage means (23) cooperating with the processing means (21) in order to record a unique module identifier (ID20).

5. Module according to any of claims 2 to 4, comprising storage means (23) cooperating with the processing means (21) in order to record a data (ID30, ID30b) contained in an input message (Mi).

6. Method for producing a multimedia content item (C2) and a meta information item (12) associated with said content item (C2), said method being implemented by processing means (21) of a control module (20) of a receiver according to any of claims 1 to 5, comprising a step for decoding a first multimedia content item (C1) associated with a first meta information item (I1), a step (101) for producing a second multimedia content item (C2) and a second meta information item (I2) from the first multimedia content item (C1) and the first meta information item (I1), and a step for producing a command which can be interpreted by the decoding means (I1) of the receiver (10), said method being **characterized in that** it further comprises a step (101) for producing an output message (Mo), on the basis of or comprising said first meta information item (I1), to a remote object (30) communicating with said control module (20), and a step for emitting said output message via the communication means of said module.

7. Method according to the preceding claim when the module (20) is in accordance with claim 4, wherein the step (101) for producing an output message (Mo) comprises a step for integrating the unique module identifier (ID20) into the output message (Mo).

8. Method according to claim 6 when the module (20) is in accordance with claim 4, the unique module identifier (ID20) consisting of a public key associated with a private key, wherein the step (101) for producing an output message (Mo) comprises a step for signing the output message (Mo) with the private key of the module (20).

9. Method according to any of claims 6 to 8 when the control module (20) is in accordance with any of claims 2 to 5, comprising a step for interpreting the content of an input message (Mi) received by the communication means (22) of the module, said input message (Mi) being previously emitted from a remote object (30) communicating with said module (20) and wherein the step (101) for producing the second multimedia content item (C2) and the second meta information item (I2) consists of combining the first decoded multimedia content item or the first meta information item associated with said first content item with a data contained in said input message (Mi).

10. Method according to claim 9, wherein the step (101) for producing the second meta information item (I2) consists of supplementing and/or replacing the first meta information item (I1) associated with the first multimedia content item (C1) with a data contained in the input message (Mi).

11. Method according to either claim 9 or claim 10, the first multimedia content item (C1) being associated with a plurality of first meta information items (I1), comprising a step before the step (101) for producing an output message (Mo) to a remote object (30) communicating with said control module (20) for selecting a meta information item from said plurality in order to produce said output message on the basis of a data previously transmitted in an input message (Mi).

12. Method according to claim 6 when the control module (20) is in accordance with any of claims 2 to 5, comprising a step (103) for interpreting an input message (Mi) received by the communication means (22) of the module, said input message (Mi) being previously transmitted from a remote object (30) communicating with said module, and wherein the step for producing the interpretable command is dependent on a data contained in the input message (Mi).

13. Method according to any of claims 6 to 12 when the module (20) is in accordance with claim 4, comprising a prior step of discovering an electronic object located within communication range of the module, said step consisting of recording, in the storage means (23) of the module (20), an identifier (ID30) of said object (30) that is contained in an input message (Mi) which is emitted by said object and previously interpreted by the processing means (21) of the module.

14. Module according to any of claims 1 to 5, comprising storage means (23) cooperating with the processing means (21) for recording a computer program, the program instruction(s) of which, when interpreted or executed by said processing means (21), activate the implementation of a production method according to any of claims 6 to 13.

15. Electronic object (30, 30b) comprising communication means (32) capable of establishing a wireless communication (R1) with a control module (20) of a multimedia content receiver (10) according to any of claims 1 to 5 or 14, said object (30, 30b) comprising processing means (31) adapted for:
- interpreting an input message (Mo) transmitted by said module (20) and determining therefrom a meta information item (11) associated with a multimedia content item (C1) decoded by said module;
- producing and transmitting an output message (Mi) to the control module (20) when said module is in accordance with any of claims 2 to 5 or 14, said message (Mi) being possibly interpreted by the processing means (21) of said module (20) in order to produce a multimedia content item (C2) and/or a meta information item (12) associated with said content item or even a command (Cmd20) which can be interpreted by a receiver (10) cooperating with said module (20).

16. Object according to claim 15, comprising storage means (33) cooperating with the processing means (31) of the object in order to record a unique object identifier (ID30, ID30b).

17. Object according to either claim 15 or claim 16, comprising means for establishing communication (R2) with a remote server (40), wherein the processing means (31) are suitable for emitting a message (MSo) to said server (40) and/or receiving a message (MSi) emitted by said server (40).

18. Object according to any of claims 15 to 17, comprising storage means (33) cooperating with the processing means (31) in order to record a computer program, the program instruction(s) of which, when interpreted or executed by said processing means (31) of the object, activate the implementation of a method for communicating with a control module (20) of a multimedia content receiver.

19. Method for communicating with a control module of a receiver of multimedia content items (C1, C2) previously and respectively associated with meta information items (11, 12), said method being implemented by processing means (31) of an electronic object (30, 30b) according to any of claims 15 to 18 located within a range for wireless communication (R1) with a module (20) according to any of claims 1 to 5 or 14, **characterized in that** it comprises a step (102) for interpreting an input message (Mo) emitted from said module and determining a meta information item (11) associated with a multimedia content item (C1) decoded by said module, and a step for implementing processing on the basis of the content of said meta information item (11).

20. Method according to the preceding claim when the object is in accordance with claim 15 and the module is in accordance with any of claims 2 to 5 or 14, wherein the processing consists of producing an output message (Mi) which can be interpreted by the processing means (21) of the control module (20) in order to produce a multimedia content item (C2), a meta information item (12) and/or a command (Cmd20) which can be interpreted by a receiver (10) cooperating with the module.

21. Method according to claim 20 when the object (30) is in accordance with claim 16, wherein the step (102) for producing an output message (Mi) comprises a step for integrating the unique object identifier (ID30) into the output message (Mi).

22. Method according to any of claims 19 to 21 when the module is in accordance with claim 4, comprising a prior step of discovering the module located within communication range of the object, said step consisting of recording, in the storage means (33) of the object (30), an identifier (ID20) of said module (20) contained in an input message (Mo) emitted by said module and previously interpreted by the processing means (31) of the object.

23. Method according to any of claims 19 to 22 when the object is in accordance with claim 17, **characterized in that** it comprises a step (108) for interpreting an input message (MSi) emitted from the server (40), reading an information item contained in said message and preparing an output message (Mi) to the control module, with the data contained in said message integrating said information.

24. Method according to any of claims 19 to 23 when the object is in accordance with claim 17, **characterized in that** it comprises a step (102) for producing and then emitting an output message (MSo) to the server (40) comprising an information item related to the meta information item (I1) associated with a multimedia content item (C1) decoded by said module.

25. Server (40) comprising processing means (41), means (43) for communicating with one or more electronic objects (30, 30b) according to claims 16 and 17, and storage means (42), said communication means (43) and said storage means (42) cooperating with said processing means (41), **characterized in that** the storage means (42) record the identifier (ID30, ID30b) of a first and a second object (30, 30b) in advance in order to create a predetermined group of objects held respectively by users of a predetermined community, and **in that** the processing means (41) are suitable for interpreting an input message (MSo) emitted from the first object and preparing an output message (MSi) to the second object, the content of said output message (MSi) being dependent on that of the input message (MSo).

26. Receiver (10) comprising means (11)for decoding a multimedia content item (C1, C2), interpreting a meta information item (I1, I2) associated therewith and supplying, in response to a predetermined command (Cmd20, Cmd14), an information item (C3) that can be used by an output peripheral device (12), **characterized in that** it further comprises a control module (20) according to any of claims 1 to 5 or 14.

27. System comprising a receiver (10) of multimedia content items respectively associated with meta information items, a control module (20) according to any of claims 1 to 5 or 14 cooperating with said receiver (10), and an electronic object (30) according to any of claims 15 to 18 within wireless communication range (R1) of said module (20).

28. System according to the preceding claim, wherein the object (30) consists of a smart mobile phone or tablet communicating (R1) with the control module in accordance with the Wi-Fi communication protocol, the receiver is a television set comprising a "common interface" connector for taking in said control module (20), the processing means (21) of the control module (20) and the decoding means (I1) of the receiver communicate via a PCMCIA communication interface (13), the multimedia content items (C1) comply with the "Digital Video Broadcasting" standard and the meta information items (I1) correspond to the attribute tables associated with said digital content items, including the "Event Information Table."

29. System according to either claim 27 or claim 28, further comprising a server (40) in accordance with claim 25, the electronic object and the server communicating (R2) by means of the Internet network.

30. Computer program comprising one or more program instructions which, when interpreted or executed by a processing unit of a control module of a receiver according to claim 14, activate the implementation of a method according to any of claims 6 to 13.

31. Computer program comprising one or more program instructions which, when interpreted or executed by a processing unit of an electronic object according to claim 18, activate the implementation of a method according to any of claims 19 to 24.
